# EUROPEAN PATENT SPECIFICATION

(11) **EP 3 444 300 B1**
(45) Date of publication and mention of the grant of the patent: **18.11.2020**
(21) Application number: 17782108.9
(22) Date of filing: 16.02.2017
(51) Int. Cl.: C08L 23/00, C08K 3/22, C08K 5/13, C08K 5/3462, C08K 5/3477, C08K 5/524, C08J 5/00

(54) **FLAME-RETARDANT POLYOLEFIN-BASED RESIN COMPOSITION**
FLAMMHEMMENDE HARZZUSAMMENSETZUNG AUF POLYOLEFINBASIS
COMPOSITION DE RÉSINE IGNIFUGE À BASE DE POLYOLÉFINE

(30) Priority: 13.04.2016 JP 2016080526
(43) Date of publication of application: 20.02.2019
(73) Proprietor: Adeka Corporation, Tokyo 116-8554 (JP)
(72) Inventor: SAKURAI, Hisashi, Saitama-shi Saitama 336-0022 (JP); SHIMIZU, Tatsuya, Saitama-shi Saitama 336-0022 (JP); TANJI, Naoko, Saitama-shi Saitama 336-0022 (JP); YONEZAWA, Yutaka, Saitama-shi Saitama 336-0022 (JP)
(74) Representative: Forstmeyer, Dietmar
(86) International application number: PCT/JP2017/005607
(87) International publication number: WO 2017/179289

(56) References cited:
- EP-A1- 2 762 532
- WO-A1-2011/102324
- WO-A1-2013/047618
- JP-A- H08 320 246
- JP-A- S62 184 042
- JP-A- 2012 062 414
- US-A1- 2012 273 268

## Description

### Technical Field

The present invention relates to a flame-retardant polyolefin-based resin composition that is excellent in thermal resistance and flame retardancy with intact resin-specific physical properties.

### Background Art

Synthetic resins are widely used in various types of molded products such as films, sheets, and structural components, because they are not only excellent in fabricability, heat resistance, mechanical properties and the like, but also have advantages such as low specific gravity and lightweight. Furthermore, many attempts have been made in order to provide synthetic resins with new physical properties such as shock resistance and elasticity by blending them with other polymers.

However, since many highly flammable synthetic resins such as polyolefin-based resins are used in a wide variety of fields, it is necessary to blend a flame retardant in order to provide these resins with flame retardancy. It is known that, as such a flame retardant, an intumescent flame retardant has excellent flame retardancy. The intumescent flame retardant is mainly made of polyphosphoric acid or pyrophosphoric acid, and a salt of a nitrogen-containing compound, and swells on combustion to form a swollen surface layer, which prevents diffusion of a decomposition product and heat transfer thereby to achieve flame retardation.

A particularly high performance is required in applications where a high thermal resistance and a high flame retardancy are required, such as household electric appliances and devices around batteries of automobiles.

Conventionally, techniques have been proposed that use an intumescent flame retardant and an antioxidant in combination in order to achieve both a high thermal resistance and a high flame retardancy (see Patent Literatures 1, 2, and 3), but the thermal resistance may be insufficient or a large amount of the antioxidant has to be added, depending on the type of antioxidant used in combination. Thus, there is a need for a flame-retardant polyolefin-based resin composition that is excellent in thermal resistance and flame retardancy without requiring a large amount of the antioxidant.

### Citation List

### Patent Literature

Patent Literature 1: Japanese Patent No. 5503071
Patent Literature 2: U.S. Patent Application Publication No. 2011/0092622
Patent Literature 3: U.S. Patent Application Publication No. 2007/0176154

### Summary of Invention

### Problems to be Solved by the Invention

Accordingly, it is an object of the present invention to provide a polyolefin-based resin composition with an excellent thermal resistance and an excellent flame retardancy.

### Means to Solve the Problems

As a result of earnest studies to achieve the object, the present inventors have made the present invention. The invention provides a flame-retardant polyolefin-based resin composition comprising a polyolefin-based resin and components (A), (B), and (C):
(A): one or more melamine salts selected from the group consisting of melamine orthophosphate, melamine pyrophosphate, and melamine polyphosphate,
(B): one or more piperazine salts selected from the group consisting of piperazine orthophosphate, piperazine pyrophosphate, and piperazine polyphosphate, and
(C): a compound represented by General Formula [1] and/or a compound represented by General Formula [2]: 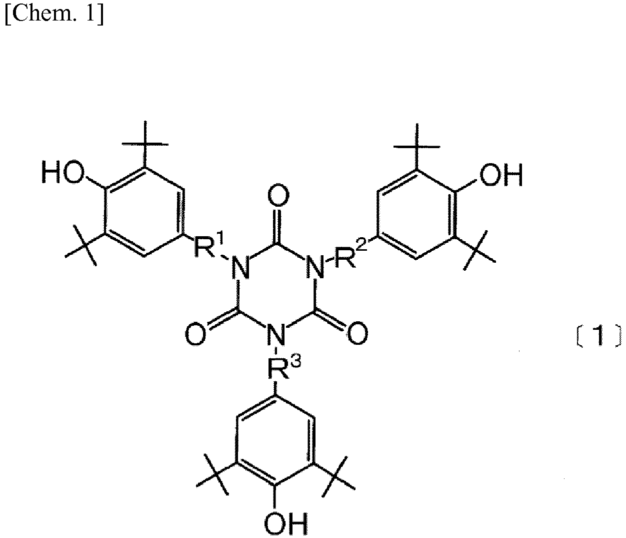
wherein R¹, R², and R³ are each independently a bivalent hydrocarbon group with 1 to 3 carbon atoms, and 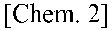 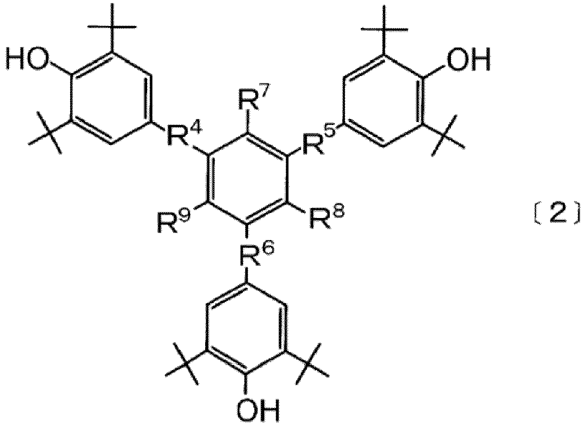 wherein R⁴, R⁵, and R⁶ are each independently a bivalent hydrocarbon group with 1 to 3 carbon atoms, and R⁷, R⁸, and R⁹ are each independently a hydrogen atom or a univalent hydrocarbon group having 1 to 4 carbon atoms.

### Description of Embodiments

Hereinafter, a flame-retardant polyolefin-based resin composition of the present invention will be described based on its preferable embodiments. The present invention relates to a flame-retardant polyolefin-based resin composition. As used herein, the terminology "flame-retardant" means having resistance to ignition, being ignitable but allowing only a very low speed of flame spread, or being ignitable but self-distinguishing, and preferably means meeting at least V-2 classification according to the UL-94V standard specifically described later in Examples. A flame-retardant polyolefin-based resin composition means a composition containing one or more flame retardant components and one or more polyolefin-based resins. Hereinafter, the components will be sequentially described.

First, the polyolefin-based resin that is used in the flame-retardant polyolefin-based resin composition of the present invention will be described.

There is no particular limitation on the polyolefin-based resin that is used in the flame-retardant polyolefin-based resin composition of the present invention, and examples thereof include: α-olefin polymers such as low-density polyethylene, linear low-density polyethylene, high-density polyethylene, isotactic polypropylene, syndiotactic polypropylene, hemiisotactic polypropylene, polybutene, cycloolefin polymer, stereoblock polypropylene, poly-3-methyl-1-butene, poly-3-methyl-1-pentene, and poly-4-methyl-1-pentene; and α-olefin copolymers such as ethylene/propylene block or random copolymer, ethylene-methyl methacrylate copolymer, and ethylene-vinyl acetate copolymer.

In the present invention, the polyolefin-based resin can be used regardless of molecular weight, the degree of polymerization, density, softening point, solvent-insoluble content, the degree of stereoregularity, the presence or absence of a catalyst residue, the type and compounding ratio of starting monomers, the type of the polymerization catalyst (e.g., a ziegler catalyst, a metallocene catalyst, etc.), and the like.

The polyolefin-based resin that is used in the present invention has a melt flow index (MFI) of from 3 to 60 g/10 min, and more preferably from 5 to 40 g/10 min. If MFI is less than 3 g/10 min, it may be difficult to process the resin, and, if MFI is greater than 60 g/10 min, the physical properties of the resulting molded article may deteriorate.

MFI herein is measured at 190°C and 10 kg in accordance with ASTM D 1238.

In the present invention, a polyolefin polymer alloy of a polyolefin-based resin and a thermoplastic elastomer may be used. Examples of the thermoplastic elastomer that can be used in the polymer alloy include a styrene-based thermoplastic elastomer, a polyolefin-based thermoplastic elastomer, a polyvinyl chloride-based thermoplastic elastomer, a polyurethane-based thermoplastic elastomer, a polyester-based thermoplastic elastomer, a polyamide-based thermoplastic elastomer, a transpolyisoprene-based thermoplastic elastomer, a fluorine rubber-based thermoplastic elastomer, and a chlorinated polyethylene-based thermoplastic elastomer.

The styrene-based thermoplastic elastomer may be a copolymer of styrene and/or α -methyl styrene with another monomer (e.g., maleic anhydride, phenylmaleimide, methyl methacrylate, butadiene, acrylonitrile, etc.). Examples thereof include: thermoplastic resins such as acrylonitrile-styrene (AS) resin, acrylonitrile-butadiene-styrene (ABS) resin, methyl methacrylate-butadiene-styrene (MBS) resin, heat-resistant ABS resin, styrene-butadiene-styrene (SBS) resin, acrylonitrile-acrylate-styrene (AAS) resin, styrene-maleic anhydride (SMA) resin, methacrylate-styrene (MS) resin, styrene-isoprene-styrene (SIS) resin, acrylonitrile-ethylenepropylene rubber-styrene (AES) resin, styrene-butadiene-butylene-styrene (SBBS) resin, and methyl methacrylate-acrylonitrile-butadiene-styrene (MABS) resin; and hydrogenated styrene-based elastomer resins obtained by hydrogenation of double bonds of butadienes or isoprenes of these resins, such as styrene-ethylene-butylene-styrene (SEBS) resin, styrene-ethylene-propylene-styrene (SEPS) resin, styrene-ethylene-propylene (SEP) resin, and styrene-ethylene-ethylene-propylene-styrene (SEEPS) resin. These may be used singly or in a combination of two or more thereof.

The polyolefin-based thermoplastic elastomer may be an α-olefin polymer or copolymer with 2 to 20 carbon atoms. Specific examples thereof include ethylene-propylene resin, ethylene-butene resin, ethylene-hexene resin, ethylene-methylpentene resin, ethylene-octene resin, butene resin, butene-methylpentene resin, methylpentene resin, ethylene-vinyl acetate resin, ethylene-methacrylic acid resin, and ethylene-methyl methacrylate resin. These may be used singly or in a combination of two or more thereof.

The polyolefin-based resin is more preferably a polypropylene-based resin such as isotactic polypropylene, syndiotactic polypropylene, hemiisotactic polypropylene, stereoblock polypropylene, or ethylene/propylene block or random copolymer, in view of the physical properties of the resin.

In the present invention, the content of the polyolefin-based resin in the flame-retardant polyolefin-based resin composition of the present invention is preferably from 35 to 88% by mass, more preferably from 40 to 85% by mass, and even more preferably from 45 to 80% by mass.

When a polyolefin polymer alloy of a polyolefin-based resin and a thermoplastic elastomer is used as the polyolefin-based resin, the above-described content refers to the content of the polyolefin polymer alloy.

Next, the melamine salt as component (A) that is used in the flame-retardant polyolefin-based resin composition of the present invention will be described. The melamine salt as component (A) is used as a flame retardant component. The melamine salt as component (A) is selected from the group consisting of melamine orthophosphate, melamine pyrophosphate, and melamine polyphosphate. These may be used singly or in a combination of two or more. Preferred of them is melamine pyrophosphate in terms of flame retardancy. When two or more of the melamine salts are used in combination, the higher proportion of melamine pyrophosphate is preferred. The molar ratio of pyrophosphoric acid to melamine in melamine pyrophosphate is preferably 1:1.5 to 1:2.5, more preferably 1:2.

While these melamine phosphates may be obtained by the reaction between a corresponding phosphoric acid or phosphate and melamine, it is preferable to use as component (A) melamine pyrophosphate or melamine polyphosphate, particularly melamine pyrophosphate, obtained by heat-condensation of monomelamine orthophosphate.

Next, a piperazine salt as component (B) that is used in the flame-retardant polyolefin-based resin composition of the present invention will be described. The piperazine salt as component (B) is used as a flame retardant component. The piperazine salt as component (B) is selected from the group consisting of piperazine orthophosphate, piperazine pyrophosphate, and piperazine polyphosphate. These may be used singly or in a combination of two or more. Preferred of them is piperazine pyrophosphate for flame retardation. When two or more piperazine salts are used in combination, the higher proportion of piperazine pyrophosphate is preferred. The molar ratio of pyrophosphoric acid to piperazine in piperazine pyrophosphate is preferably 1:0.5 to 1:1.5, more preferably 1:1.

While these piperazine phosphates may be obtained by the reaction between a corresponding phosphoric acid or phosphate and piperazine, it is preferable to use as component (B) piperazine pyrophosphate or piperazine polyphosphate, particularly piperazine pyrophosphate, obtained by heat-condensation of monopiperazine bisorthophosphate.

The content of component (A) in the flame-retardant polyolefin-based resin composition of the present invention is preferably from 3 to 29% by mass, more preferably from 5 to 24% by mass, and even more preferably from 6 to 22% by mass. The content of component (B) in the flame-retardant resin composition of the present invention is preferably from 9 to 46% by mass, more preferably from 13 to 38% by mass, and even more preferably from 15 to 35% by mass.

The sum of the contents of components (A) and (B) in the flame-retardant polyolefin-based resin composition of the present invention is preferably from 15 to 60% by mass, more preferably from 20 to 50% by mass, and even more preferably from 25 to 45% by mass, in order to provide an excellent flame retardancy without impairing the physical properties of the resin. If the sum is less than 15% by mass, the resin composition may fail to exhibit sufficient flame retardancy, and, if the sum is greater than 60% by mass, the physical properties of the resin may be impaired.

The compounding mass ratio of component (A) to component (B), (A)/(B), is preferably from 20/80 to 50/50, and more preferably from 30/70 to 50/50.

Next, component (C) that is used in the flame-retardant polyolefin-based resin composition of the present invention will be described.

In the flame-retardant polyolefin-based resin composition of the present invention, a compound represented by General Formula [1] below and/or a compound represented by General Formula [2] below, each of which is a phenol-based antioxidant, is used as component (C). These compounds exert the sufficient effects of preventing oxidation even when used singly, and thus they function as a primary antioxidant. 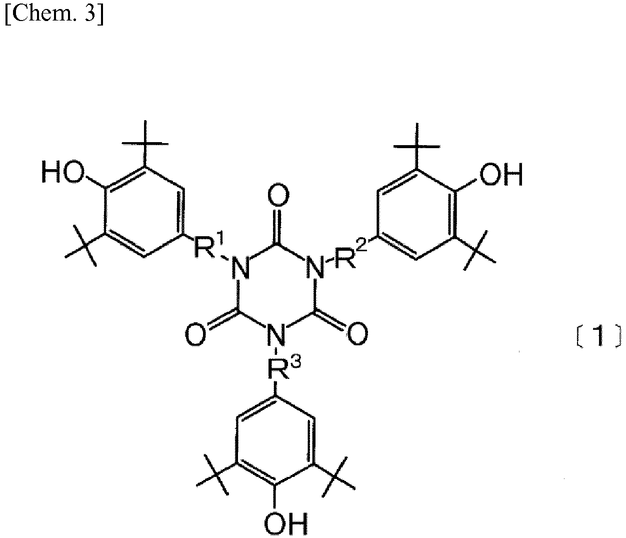 wherein R¹, R², and R³ are each independently a bivalent hydrocarbon group having 1 to 3 carbon atoms. 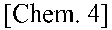 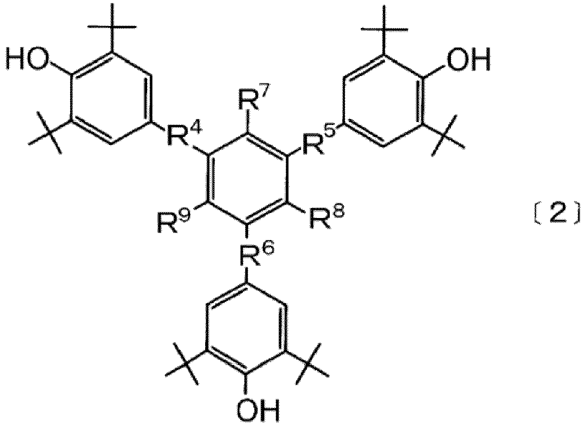 wherein R⁴, R⁵, and R⁶ are each independently a bivalent hydrocarbon group having 1 to 3 carbon atoms, and R⁷, R⁸, and R⁹ are each independently a hydrogen atom or a univalent hydrocarbon group having 1 to 4 carbon atoms.

The reason why the compound represented by General Formula [1] or [2] above is employed as the phenol-based antioxidant in the present invention is as follows.

If a phenol-based antioxidant has an ester bond in its molecules, the ester bond may break during processing of the resin, and the resulting substances, which have a reduced molecular weight, volatilize to thereby fail to sufficiently exert the antioxidant effect.

Among the phenol-based antioxidants, a less-hindered or semi-hindered phenol-based antioxidant is likely to transforms into a quinone structure during processing of the resin and then cause coupling, and thus it cannot exert the sufficient antioxidant effect, and furthermore causes coloring of the resin. Moreover, if the number of hindered phenol moieties in one molecule is one, the antioxidant effect cannot be sufficiently exerted, and thus a plurality of such moieties are necessary.

Accordingly, the compound represented by General Formula [1] or [2] above is employed as the phenol-based antioxidant, the compound being a hindered phenol-based antioxidant having no ester bond in its molecule and having two or more hindered phenol moieties in one molecule.

Examples of the bivalent hydrocarbon group having 1 to 3 carbon atoms represented by R¹, R², and R³ in General Formula [1] include a linear or branched alkylene group, a linear or branched alkenylene group, and an alkenylene group.

Examples of the linear alkylene group include -(CH₂)ₙ- (n is an integer of 1 to 3). Examples of the branched alkylene group include -CH (CH₃)-, -CH₂(CH₂CH₃)-, -CH(CH₃)CH₂-, and -CH₂CH(CH₃)-. Examples of the linear alkenylene group include -CH=CH-, -CH=CH-CH₂-, and -CH₂-CH=CH-. Examples of the branched alkenylene group include -C(CH₃)=CH- and -CH=C(CH₃)-, and examples of the alkenylene group include -C=C-, -CH₂-C≡C-, and -C≡C-CH₂-.

Examples of the compound represented by General Formula [1] include 1,3,5-tris(3,5-di-tert-butyl-4-hydroxybenzyl)isocyanurate, 1,3,5-tris(3,5-di-tert-butyl-4-hydroxyphenylethyl)isocyanurate, and 1,3,5-tris(3,5-di-tert-butyl-4-hydroxyphenylpropyl)isocyanurate. They may be used singly or in a combination of two or more thereof. Among them, it is preferable to contain 1,3,5-tris(3,5-di-tert-butyl-4-hydroxybenzyl)isocyanurate.

Examples of the bivalent hydrocarbon group having 1 to 3 carbon atoms represented by R⁴, R⁵, and R⁶ in General Formula [2] include those listed for the bivalent hydrocarbon group having 1 to 3 carbon atoms represented by R¹, R², and R³.

Examples of the univalent hydrocarbon group having 1 to 4 carbon atoms represented by R⁷, R⁸, and R⁹ include a linear or branched alkyl group, a linear or branched alkenyl group, and a linear or branched alkynyl group. Examples of the linear alkyl group include CH₃-, CH₃CH₂-, CH₃CH₂CH₂-, and CH₃CH₂CH₂CH₂-. Examples of the branched alkyl group include CH₃(CH₃)CH-, CH₃(CH₃)CH₂CH₂-, CH₃CH₂(CH₃)CH-, and (CH₃)₃C-. Examples of the linear alkenyl group include CH₂=CH-, CH₂=CHCH₂-, CH₃CH=CH-, CH₂=CHCH₂CH₂-, CH₃CH=CHCH₂-, and CH₃CH₂CH=CH-. Examples of the branched alkenyl group include CH(CH₃)=CH-, CH₂=C(CH₃)-, CH₂=C(CH₃)CH₂-, and CH₃C(CH₃)=CH₂-. Examples of the alkynyl group include CH=C-, CH≡CCH₂-, CH₃C≡C-, CH≡CCH₂CH₂-, CH₂C≡CCH₂-, and CH₂CH₂C≡CH₂-.

Examples of the compound represented by General Formula [2] include 1,3,5-tris(3,5-di-tert-butyl-4-hydroxybenzyl)-2,4,6-trimethylbenzene, 1,3,5-tris(3,5-di-tert-butyl-4-hydroxyphenylethyl)-2,4,6-trimethylbenzene, 1,3,5-tris(3,5-di-tert-butyl-4-hydroxyphenylpropyl)-2,4,6-trimethylbenzene, 1,3,5-tris(3,5-di-tert-butyl-4-hydroxybenzyl)-2,4,6-triethylbenzene, 1,3,5-tris(3,5-di-tert-butyl-4-hydroxybenzyl)-2,4,6-tripropylbenzene, 1,3,5-tris(3,5-di-tert-butyl-4-hydroxybenzyl)-2,4,6-tributylbenzene, and 1,3,5-tris(3,5-di-tert-butyl-4-hydroxybenzyl)benzene. They may be used singly or in a combination of two or more thereof. Among them, it is preferable to contain 1,3,5-tris(3,5-di-tert-butyl-4-hydroxybenzyl)-2,4,6-trimethylbenzene.

The compound represented by General Formula [1] above and the compound represented by General Formula [2] above may be used singly or in a combination between these two groups. In the case where they are used in combination, there is no limitation on the mixing ratio.

The content of component (C) in the flame-retardant polyolefin-based resin composition of the present invention is preferably from 0.01 to 5% by mass, more preferably from 0.05 to 3% by mass, and even more preferably from 0.07 to 1.5% by mass.

If the content of component (C) is less than 0.01% by mass, the thermal resistance may be insufficient. Even if the content is greater than 5% by mass, it is not possible to obtain a thermal resistance greater than that at 5% by mass, and thus increasing the content is fruitless.

Next, component (D) that may be used in the flame-retardant polyolefin-based resin composition of the present invention will be described.

It is preferable that the flame-retardant polyolefin-based resin composition of the present invention further contain a phosphorous acid-based antioxidant as component (D). The phosphorous acid-based antioxidant as component (D) exerts higher thermal resistance when used in combination with component (C), which is a primary antioxidant, and thus the phosphorous acid-based antioxidant functions as a secondary antioxidant.

There is no particular limitation on the phosphorous acid-based antioxidant as component (D) in the present invention, and examples thereof include trisnonylphenyl phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexylphosphite, 2,2'-methylenebis(4,6-tert-butylphenyl)-octadecyl phosphite, 2,2'-ethylidenebis(4,6-di-tert-butylphenyl)fluoro phosphite, tris(2-[(2,4,8,10-tetrakis-tert-butyldibenzo[d,f][1,3,2]dioxaphosphepine-6-yl)oxy]ethyl)amine, 2-ethyl-2-butylpropylene glycol and 2,4,6-tri-tert-butylphenol phosphite, and tris(2,4-di-tert-butylphenyl)phosphite. They may be used singly or in a combination of two or more thereof.

Preferred of them are bis(2,6-di-tert-butyl-4-methylphenyl)pentaerythritol diphosphite, 2,2'-methylenebis(4,6-tert-butylphenyl)-2-ethylhexylphosphite, and tris(2,4-di-tert-butylphenyl)phosphite.

The content of component (D) in the flame-retardant polyolefin-based resin composition of the present invention is preferably from 0.01 to 5% by mass, more preferably from 0.05 to 3% by mass, and even more preferably from 0.07 to 1.5% by mass based on the flame-retardant polyolefin-based resin composition.

Next, component (E) that may be used in the flame-retardant polyolefin-based resin composition of the present invention will be described.

It is preferable that the flame-retardant polyolefin-based resin composition of the present invention further contain zinc oxide (ZnO) as component (E). Zinc oxide is used as a flame retardant component. Zinc oxide may be surface-treated. Commercially available zinc oxide products may be used, including JIS class 1 zinc oxide available from Mitsui Mining and Smelting Co. Ltd., partially coated zinc oxide available from Mitsui Mining and Smelting Co. Ltd., Nanofine 50 (ultrafine zinc oxide with average particle diameter of 0.02 µm) from Sakai Chemical Industries Ltd., and Nanofine K (ultrafine zinc silicate-coated zinc oxide with average particle diameter of 0.02 µm) from Sakai Chemical Industries Ltd. These may be used singly or in a combination of two or more thereof.

The content of component (E) in the flame-retardant polyolefin-based resin composition of the present invention is preferably from 0.01 to 10 parts by mass, more preferably from 0.5 to 10 parts by mass, and even more preferably from 1.0 to 7.5 parts by mass, with respect to 100 parts by mass of the total of component (A) and (B), in view of flame retardancy.

Furthermore, it is also preferable that the flame-retardant polyolefin-based resin composition of the present invention contain a lubricant where necessary. Examples of useful lubricants include pure hydrocarbon lubricants, such as liquid paraffins, natural paraffins, microwaxes, synthetic paraffins, low molecular weight polyethylenes, and polyethylene waxes; halogenated hydrocarbon lubricants; fatty acid lubricants, such as higher fatty acids and oxy fatty acids; fatty acid amide lubricants, such as fatty acid amides and bis-fatty acid amides; ester lubricants, such as lower alcohol esters of fatty acids, polyhydric alcohol esters of fatty acids (e.g., glycerides), polyglycol esters of fatty acids, and fatty alcohol esters of fatty acids (ester waxes); metal soaps; fatty alcohols; polyhydric alcohols; polyglycols; polyglycerols; partial esters of fatty acids and polyhydric alcohols; partial esters of fatty acids and polyglycol or polyglycerol; silicone oils; and mineral oils.

The content of the lubricant is preferably from 0.01 to 5 parts by mass, and more preferably from 0.05 to 3 parts by mass, with respect to 100 parts by mass of the polyolefin-based resin.

It is also preferable that the flame-retardant polyolefin-based resin composition of the present invention contain a silicone oil as a processing aid in order to improve the processability. Examples of suitable silicone oils include dimethyl silicone oil (polysiloxane having methyl as all the side groups and both end groups), methyl phenyl silicone oil (polysiloxane having phenyl as part of side groups), methyl hydrogen silicone oil (polysiloxane having hydrogen at part of side chains), and copolymers of these siloxanes. Modified silicone oils may be used, which are obtained by introducing an organic group to part of the side chains and/or ends of the polysiloxanes described above, such as amine-, epoxy-, alicyclic epoxy-, carboxyl-, carbinol-, mercapto-, polyether-, long chain alkyl-, fluoroalkyl-, higher fatty acid ester-, higher fatty acid amide-, silanol-, diol-, phenol- and/or aralkyl-modified silicone oils.

Specific examples of the silicone oil include: dimethyl silicone oils such as KF-96 (available from Shin-Etsu Chemical Co., Ltd.), KF-965 (available from Shin-Etsu Chemical Co., Ltd.) and KF-968 (available from Shin-Etsu Chemical Co., Ltd.); methylhydrogen silicone oils or silicone oils having a methylhydrogen polysiloxane structure such as KF-99 (available from Shin-Etsu Chemical Co., Ltd.), KF-9901 (available from Shin-Etsu Chemical Co., Ltd.), HMS-151 (available from Gelest, Inc.), HMS-071 (available from Gelest, Inc.), HMS-301 (available from Gelest, Inc.) and DMS-H21 (available from Gelest, Inc.); methyl phenyl silicone oils such as KF-50 (available from Shin-Etsu Chemical Co., Ltd.), KF-53 (available from Shin-Etsu Chemical Co., Ltd.), KF-54 (available from Shin-Etsu Chemical Co., Ltd.) and KF-56 (available from Shin-Etsu Chemical Co., Ltd.); epoxy-modified silicone oils such as X-22-343 (available from Shin-Etsu Chemical Co., Ltd.), X-22-2000 (available from Shin-Etsu Chemical Co., Ltd.), KF-101 (available from Shin-Etsu Chemical Co., Ltd.), KF-102 (available from Shin-Etsu Chemical Co., Ltd.) and KF-1001 (available from Shin-Etsu Chemical Co., Ltd.); carboxyl-modified silicone oils such as X-22-3701E (available from Shin-Etsu Chemical Co., Ltd.); carbinol-modified silicone oils such as X-22-4039 (available from Shin-Etsu Chemical Co., Ltd.) and X-22-4015 (available from Shin-Etsu Chemical Co., Ltd.); and amine-modified silicone oils such as KF-393 (available from Shin-Etsu Chemical Co., Ltd.).

The content of the silicone oil as a processing aid is preferably from 0.01 to 10% by mass, more preferably from 0.05 to 7% by mass, and even more preferably from 0.1 to 5% by mass based on the flame-retardant polyolefin-based resin composition of the present invention.

The flame-retardant polyolefin-based resin composition of the present invention may further contain, where necessary, one or more halogen-free organic and inorganic flame retardants and flame-retardant aids as long as the effects of the present invention are not impaired. Examples of useful flame retardants and flame retardant aids include triazine ring-containing compounds, metal hydroxides, phosphoric ester flame retardants, condensed phosphoric ester flame retardants, phosphate flame retardants, inorganic phosphorus flame retardants, dialkyl phosphinates, silicone flame retardants, metal oxides, boric acid compounds, thermally expandable graphite, other inorganic flame retardant aids, and other organic flame retardants.

Examples of the triazine ring-containing compound include ammeline, benzguanamine, acetguanamine, phthalodiguanamine, melamine cyanurate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine.

Examples of the metal hydroxide include magnesium hydroxide, aluminum hydroxide, calcium hydroxide, barium hydroxide, zinc hydroxide, and KISUMA 5A (available from Kyowa Chemical Industry Co., Ltd., trade name of magnesium hydroxide).

Examples of the phosphoric ester flame retardant include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, trisisopropylphenyl phosphate, 2-ethylhexyldiphenyl phosphate, t-butylphenyldiphenyl phosphate, bis(t-butylphenyl)phenyl phosphate, tris(t-butylphenyl)phosphate, isopropylphenyldiphenyl phosphate, bis(isopropylphenyl)diphenyl phosphate, and tris(isopropylphenyl)phosphate.

Examples of the condensed phosphoric ester flame retardant include 1,3-phenylene bis(diphenylphosphate), 1,3-phenylene bis(dixylenylphosphate), and bisphenol A, bis(diphenylphosphate).

Examples of the inorganic phosphorus flame retardant include red phosphorus.

Examples of the dialkyl phosphinate include aluminum diethylphosphinate and zinc diethylphosphinate.

Examples of the other inorganic flame-retardant aids include inorganic compounds such as titanium oxide, aluminum oxide, magnesium oxide, titanium dioxide and hydrotalcite, and their surface-treated products. Various commercially available products of these flame retardant aids may be used, including TIPAQUE R-680 (trade mark; titanium oxide from Ishihara Sangyo Kaisha, Ltd.), KYOWA MAG 150 (trade mark; magnesium oxide from Kyowa Chemical Industry Co., Ltd.), DHT-4A (hydrotalcite from Kyowa Chemical Industry Co., Ltd.), and ALCAMIZER 4 (trade mark; zinc-modified hydrotalcite from Kyowa Chemical Industry Co., Ltd.).

The flame-retardant polyolefin-based resin composition of the present invention may contain, where necessary, a thioether antioxidant, an ultraviolet absorber, a hindered amine light stabilizer, a deterioration inhibitor, and the like.

Examples of the thioether antioxidant include: dialkyl thiodipropionates such as dilauryl thiodipropionate, dimyristyl thiodipropionate and distearyl thiodipropionate; and pentaerythritol tetra(β-alkylthiopropionic acid esters.

The content of the thioether antioxidant is preferably from 0.001 to 10 parts by mass, and more preferably from 0.05 to 5 parts by mass, with respect to 100 parts by mass of the polyolefin-based resin.

Examples of the ultraviolet absorber include: 2-hydroxybenzophenones such as 2,4-dihydroxy benzophenone, 2-hydroxy-4-methoxy benzophenone, 2-hydroxy-4-octoxy benzophenone and 5,5 '-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-(benzotriazolyl)phenol) and 2-(2'-hydroxy-3'-tert-butyl-5'-carboxyphenyl)benzotriazole; benzoates such as phenyl salicyllate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate and hexadecyl-3,5-di-tert-butyl-4-hydroxybenzoate; substituted oxanilides such as 2-ethyl-2'-ethoxy oxanilide and 2-ethoxy4'-dodecyl oxanilide; cyanoacrylates such as ethyl-a-cyano-β,β-diphenyl acrylate and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine and 2-(2-hydroxy-4-propoxy-5-methylphenyl)-4,6-bis(2,4-di-tert-butylphenyl)-s-triazine.

The content of the ultraviolet absorber is preferably from 0.001 to 30 parts by mass, and more preferably from 0.05 to 10 parts by mass, with respect to 100 parts by mass of the polyolefin-based resin.

Examples of the hindered amine light stabilizer include hindered amine compounds such as 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-tetramethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetra carboxylate, tetrakis(1,2,2,6,6-pentamethyl-4-piperidyl)-1,2,3,4-butanetetra carboxylate, bis(2,2,6,6-tetramethyl-4-piperidyl)·di(tridecyl)-1,2,3,4-butanetetra carboxylate, bis(1,2,2,6,6-pentamethyl-4-piperidyl)di(tridecyl)-1,2,3,4-butanetetra carboxylate, bis(1,2,2,4,4-pentamethyl-4-piperidyl)-2-butyl-2-(3,5-di-tert-butyl-4-hydroxybenzyl)malonate , 1-(2-hydroxyethyl)-2,2,6,6-tetramethyl-4-piperidinol/succinic acid diethyl polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1, 5,8,12-tetraazadodecane, 1,5,8,12-tetrakis[2,4-bis(N-butyl-N-(1,2,2,6,6-pentamethyl-4-piperidyl)amino)-s-triazine-6-yl ]-1,5,8-12-tetraazadodecane, 1,6,11-tris[2,4-bis(N-butyl-N-(2,2,6,6-tetramethyl-4-piperidyl)amino)-s-triazine-6-yl]aminoun decane and 1,6,11-tris[2,4-bis(N-butyl-N-(1,2,2,6,6-pentamethyl-4-piperidyl)amino)-s-triazine-6-yl] amin oundecane.

The content of the hindered amine light stabilizer is preferably from 0.001 to 30 parts by mass, and more preferably from 0.05 to 10 parts by mass, with respect to 100 parts by mass of the polyolefin-based resin.

Examples of the deterioration inhibitor include naphthylamines, diphenylamines, p-phenyldiamines, quinolines, hydroquinone derivatives, monophenols, thiobisphenols, hindered phenols, and phosphite esters. The content of the deterioration inhibitor is preferably from 0.001 to 10 parts by mass, and more preferably from 0.05 to 5 parts by mass, with respect to 100 parts by mass of the polyolefin-based resin.

The flame-retardant polyolefin-based resin composition of the present invention may contain a reinforcing material as an optional component as long as the effects of the present invention are not impaired. The reinforcing material may have a fibrous, plate-like, granular, or powder form as is usual for application to synthetic resins. Specific examples of useful reinforcing materials include inorganic fibrous reinforcing materials, such as glass fiber, asbestos fiber, carbon fiber, graphite fiber, metal fiber, potassium titanate whisker, aluminum borate whisker, magnesium whisker, silicon whisker, wollastonite, sepiolite, asbestos, slag fiber, zonolite, ellestadite, gypsum fiber, silica fiber, silica alumina fiber, zirconia fiber, boron nitride fiber, silicon nitride fiber, and boron fiber; organic fibrous reinforcing materials, such as polyester fiber, nylon fiber, acrylic fiber, regenerated cellulose fiber, acetate fiber, kenaf, ramie, cotton, jute, hemp, sisal, flax, linen, silk, Manila fiber, sugarcane, wooden pulp, waste paper, used paper, and wool; and plate-like or granular reinforcing materials, such as glass flake, non-swellable mica, graphite, metal foil, ceramic beads, clay, mica, sericite, zeolite, bentonite, dolomite, kaolin, silicic acid powder, feldspar powder, potassium titanate, shirasu balloon, calcium carbonate, magnesium carbonate, barium sulfate, calcium oxide, aluminum oxide, titanium oxide, titanium dioxide, aluminum silicate, gypsum, novaculite, dawsonite, and white clay. The reinforcing material may have been coated or sized with a thermoplastic resin, such as an ethylene-vinyl acetate copolymer, or a thermosetting resin, such as an epoxy resin, or may have been treated with a coupling agent, such as an amino silane or an epoxysilane.

The flame-retardant polyolefin-based resin composition of the present invention may contain, as an optional component, a sheet silicate as long as the effects of the present invention are not impaired. Examples of suitable sheet silicates include smectite clay minerals, such as montmorillonite, saponite, hectorite, beidellite, stevensite, and nontronite, vermiculite, halloysite, swelling mica, and talc. The sheet silicate may have an organic cation, a quaternary ammonium cation, or a phosphonium cation pre-intercalated between the layers thereof.

The flame-retardant polyolefin-based resin composition of the present invention may further contain, as an optional component, a crystal nucleator as long as the effects of the present invention are not impaired. Any crystal nucleating agents commonly employed for polymers may be used as appropriate. In the invention, either of an inorganic crystal nucleating agent and an organic crystal nucleating agent may be used.

Examples of the inorganic crystal nucleating agent include kaolinite, synthetic mica, clay, zeolite, graphite, carbon black, magnesium oxide, titanium oxide, calcium sulfide, boron nitride, calcium carbonate, barium sulfate, aluminum oxide, neodymium oxide, and metal salts of phenyl phosphonate and the like. The inorganic crystal nucleating agent may be modified with an organic substance so as to have improved dispersibility in the composition.

Examples of the organic nucleating agent include metal salts of organic carboxylic acids, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate; organic sulfonic acid salts, such as sodium p-toluenesulfonate and sodium sulfoisophthalate; carboxylic amides, such as stearamide, ethylenebislauramide, palmitamide, hydroxystearamide, erucamide, and trimesic acid tris(tert-butyramide); benzylidenesorbitol and its derivatives, metal salts of phosphorus compounds, such as sodium 2,2'-methylenebis(4,6-di-tert-butylphenyl)phosphate; and sodium 2,2-methylbis(4,6-di-tert-butylphenyl).

The flame-retardant polyolefin-based resin composition of the present invention may contain, as an optional component, a plasticizer as long as the effects of the present invention are not impaired. Any plasticizers that are commonly used for polymers may be used as appropriate, including polyester plasticizers, glycerol plasticizers, polycarboxylic ester plasticizers, polyalkylene glycol plasticizers, and epoxy plasticizers. When the plasticizer is used in the present invention, they may be used singly or in a combination of two or more thereof.

Examples of the polyester plasticizer include polyesters composed of an acid component such as adipic acid, sebacic acid, terephthalic acid, isophthalic acid, naphthalenedicarboxylic acid, diphenyl dicarboxylic acid or rosin and a diol component such as propylene glycol, 1,3-butanediol, 1,4-butanediol, 1,6-hexanediol, ethylene glycol or diethylene glycol; and polyesters composed of a hydroxycarboxylic acid such as polycaprolactone. These polyesters may be terminated with a monofunctional carboxylic acid or a monofunctional alcohol, or may be terminated with an epoxy compound or the like.

Examples of the glycerol plasticizer include glycerol monoacetomonolaurate, glycerol diacetomonolaurate, glycerol monoacetomonostearate, glycerol diacetomonooleate, and glycerol monoacetomonomontanate.

Examples of the polycarboxylic ester plasticizer include phthalates, such as dimethyl phthalate, diethyl phthalate, dibutyl phthalate, dioctyl phthalate, diheptyl phthalate, dibenzyl phthalate, and butyl benzyl phthalate; trimellitates, such as tributyl trimellitate, trioctyl trimellitate, and trihexyl trimellitate; adipates, such as diisodecyl adipate, n-octyl n-decyl adipate, methyl diglycol butyl diglycol adipate, benzyl methyl diglycol adipate, and benzyl butyl diglycol adipate; citrates, such as triethyl acetylcitrate and tributyl acetylcitrate; azelates, such as di-2-ethylhexyl azelate; and sebacates, such as dibutyl sebacate and di-2-ethylhexyl sebacate.

Examples of the polyalkylene glycol plasticizers include polyalkylene glycols, such as polyethylene glycol, polypropylene glycol, a poly(ethylene oxide-propylene oxide) block and/or random copolymer, polytetramethylene glycol, ethylene oxide addition polymers of bisphenols, propylene oxide addition polymers of bisphenols, and tetrahydrofuran addition polymers of bisphenols; and their end-blocked compounds, such as end epoxy-modified compounds, end ester-modified compounds, and end ether-modified compounds.

In general, the term "epoxy plasticizer" generally refers to epoxy triglycerides composed of, for example, epoxy alkyl stearate and soy bean oil. What we call epoxy resins prepared mainly from bisphenol A and epichlorohydrin are also useful.

Examples of other useful plasticizers include benzoates of aliphatic polyols, such as neopentylglycol dibenzoate, diethylene glycol dibenzoate, and triethylene glycol di-2-ethylbutyrate; fatty acid amides, such as stearamide; aliphatic carboxylic esters, such as butyl oleate; oxyacid esters, such as methyl acetylricinolate and butyl acetylricinolate; pentaerythritol, sorbitols, polyacrylates, and paraffins.

The flame-retardant polyolefin-based resin composition of the present invention may further contain, as an optional component, an acrylic processing aid as long as the effects of the present invention are not impaired. As the acrylic processing aid, a homopolymer of a (meth)acrylic ester or a copolymer of two or more of (meth)acrylic esters can be used.

The flame-retardant polyolefin-based resin composition of the present invention can contain an anti-dripping agent as long as the effects of the present invention are not impaired. It should be noted, however, that it is not advisable to use a fluorine-containing anti-dripping agent, in view of freedom from halogen to reduce an environmental load and also because it would impair the physical properties of the random copolymer polypropylene. Examples of the fluorine-containing anti-dripping agent include fluorocarbon resins, such as polytetrafluoroethylene, polyvinylidene fluoride, and polyhexafluoropropylene, and alkali metal or alkaline earth metal salts of perfluoroalkanesulfonic acids, such as sodium perfluoromethanesulfonate, potassium perfluoro-n-butanesulfonate, potassium perfluoro-t-butanesulfonate, sodium perfluorooctanesulfonate, and calcium perfluoro-2-ethylhexanesulfonate.

In addition to those mentioned above, the flame-retardant polyolefin-based resin composition of the present invention may contain, where necessary, additives commonly used for synthetic resins as long as the effects of the present invention are not impaired. Useful additives include crosslinking agents, antistatics, metal soaps, fillers, antifogging agents, anti-plate-out agents, surface treating agents, fluorescent agents, antifungals, bactericides, foaming agents, metal inactivators, parting agents, pigments, processing aids, and so forth.

When the flame-retardant polyolefin-based resin composition of the present invention contains optional components other than the polyolefin-based resin and components (A) to (E), the amounts of the optional components are not particularly limited as long as the effects of the invention are not impaired. It is preferred that the total amount of the optional components be 40 parts by mass or less, and more preferably 20 parts by mass or less, with respect to 100 parts by mass of the polyolefin-based resin.

When producing the flame-retardant polyolefin-based resin composition of the present invention, there is no particular limitation on the timing at which components (A), (B), and (C), and optional components (D) and (E) are blended with the polyolefin-based resin. For example, two or more components selected from components (A) to (E) may previously be mixed, and the resulting premix may be added to the polyolefin-based resin. Alternatively, components (A) to (E) may separately be added to the polyolefin-based resin. In the former case, each component to be premixed may previously be ground, or grinding may follow the premixing.

The same manner of compounding described above applies to resins other than the polyolefin-based resin and other optional components.

The molded article of the present invention is obtained by molding the flame-retardant polyolefin-based resin composition of the present invention. The flame retardant polyolefin-based resin composition of the invention can be molded by any known molding techniques, such as extrusion, calendering, injection, rolling, compression, and blown-film extrusion, to provide molded articles of various forms, such as plates, sheets, films, or any other irregular shapes.

The flame-retardant polyolefin-based resin composition of the present invention and a molded article obtained therefrom find wide applications in various industrial fields, including electric & elecronics, communications, agriculture, forestry, fisheries, mining, construction, foods, fibers, clothing, remedy, coal, petroleum, rubber, leather, automobiles, precision equipment, lumber, building materials, civil engineering, furniture, printing, musical instruments, and so on. Specifically, the applications include stationery and OA equipment, such as printers, personal computers, word processors, keyboards, PDAs (personal digital assistants), telephone sets, copiers, fax machines, ECRs (electronic cash registers), calculators, electronic diaries, cards, holders, and writing tools; household electric appliances, such as laundry machines, refrigerators, vacuum cleaners, microwave ovens, lighting equipment, game machines, irons, and *kotatsu;* audio and visual equipment, such as TV sets, VTRs, camcorders, radio-cassette recorders, tape recorders, mini discs, CD players, speakers, and liquid crystal displays; electric and electronic components, such as connectors, relays, capacitors, switches, printed circuit boards, coil bobbins, semiconductor sealants, LED sealants, electric wires, cables, transformers, deflection yokes, distribution boards, and clocks; housings (frames, cases, covers, and enclosures) and parts of communication equipment and OA equipment; and automotive interior and exterior parts.

Furthermore, the flame-retardant polyolefin-based resin composition of the present invention and the molded article obtained therefrom are also useful in various applications, including materials for gas (petrol) vehicles, hybrid vehicles, electrical vehicles, train cars, boats, ships, aircrafts, buildings, and houses, such as seats (stuffing and upholstery), belts, ceiling covering, convertible tops, arm rests, door trims, rear package trays, rugs, mats, sun visors, wheel covers, mattress covers, air bags, insulating materials, assist grips, assist straps, wire covering, electrical insulators, paints, coatings, overlays, flooring, inside corner moldings, carpet, wallpaper, wall covering, exterior covering, interior covering, roofing, decks, walls, pillars, floor plates, fences, frames and moldings, profiles for windows and doors, roof shingles, siding boards, terraces, balconies, soundproofing boards, heat insulating boards, and window boards; civil engineering materials; and housewares and sporting equipment, such as clothing, curtains, bed sheets, chip boards, fiber boards, carpet and rugs, doormats, sheets, buckets, hoses, containers, glasses, bags, cases, goggles, skis, rackets, tents, and musical instruments.

### Examples

Hereinafter, the present invention will be specifically described by way of examples, but the present invention is not limited to the following examples. In the following examples, % means % by mass unless otherwise noted.

### Examples 1 to 5 and Comparative Examples 1 to 5

Flame-retardant olefin-based resin compositions of Examples and Comparative Examples having compositions shown in Table 1 were prepared. Next, each flame-retardant olefin-based resin composition was stirred for 30 minutes using a mixer, and extruded at 200 to 230°C to produce pellets. Injection was conducted using the pellets at 200 to 220°C to obtain two types of test specimens with sizes of 60 × 30 × 2 mm and 127 × 12.7 × 1.6 mm, respectively. These test specimens were subjected to various tests below. The results are shown in Table 1.

### UL-94V Flammability Test

A test specimen with a size of 127 × 12.7 × 1.6 mm was held with the long axis vertical. A flame of a burner was applied to the lower end of the specimen for 10 seconds and removed, and the flame duration was recorded. As soon as the specimen stopped burning, the flame was reapplied for an additional 10 seconds, and the flame duration was measured in the same manner as in the first flame application. Ignition of the cotton layer placed below the specimen by any drips of flaming particles was also observed.

The flame duration after each flame application and the ignition of the cotton layer were interpreted into a UL-94V flammability rating. The V-0 rating is the lowest flammability. The V-1 rating is less flame retardancy, and the V-2 rating is still less flame retardancy. A specimen whose results were not interpreted into any of these ratings was rated "NR". In the present invention, the resin composition of the V-2 rating or lower flame retardancy than the V-2 rating is considered to be not fit for practical use.

### Color Difference (Hue Test)

A test specimen with a size of 60 × 30 × 2 mm was put in an oven at 150°C, and the hue of the specimen was determined every 48 hours according to JIS Z 8781. The color difference ΔE^{∗} was calculated from the obtained values. The value ΔE^{∗} increases as the color of the test specimen deteriorates. In the present invention, evaluation was made on the basis of the time taken by the value ΔE^{∗} to exceed 30. A longer time taken by the value ΔE^{∗} to exceed 30 indicates a better coloring resistance, and a shorter time taken by the value ΔE^{∗} exceed 30 indicates a poorer coloring resistance. In the present invention, when the time taken by the value ΔE^{∗} to exceed 30 was less than 1100 hours, the resin composition is considered to be not fit for practical use.

### Glossiness Measurement

A test specimen with a size of 60 × 30 × 2 mm was put in an oven at 150°C, and the glossiness was determined every 48 hours according to JIS Z 8741. In the present invention, the time taken by the glossiness value to decrease to 60% was measured. A longer time taken by the glossiness value to decrease indicates a better thermal resistance, and a shorter time taken by the glossiness value to decrease indicates a poorer thermal resistance. In the present invention, when the time taken by the glossiness value to decrease to 60% is less than 1000 hours, the resin composition is considered to be not fit for practical use.

### Cracks

A test specimen with a size of 60 × 30 × 2 mm was put in an oven at 150°C, and whether or not the specimen had cracked was visually observed every 48 hours. The time taken by the specimen to crack was measured. A longer time taken by the specimen to crack indicates a better thermal resistance, and a shorter time taken by the specimen to crack indicates a poorer thermal resistance. In the present invention, when the time taken by the specimen to crack is less than 800 hours, the resin composition is considered to be not fit for practical use.

**Table 1**

| | | Example | | | | | Comparative Example. | | | | |
|---|---|---|---|---|---|---|---|---|---|---|---|
| | | 1 | 2 | 3 | 4 | 5 | 1 | 2 | 3 | 4 | 5 |
| Polypropylene resin^{*1} | | 65.8 | 65.8 | 50 | 80.5 | 58 | 66 | 65.8 | 53 | 83 | 17.6 |
| Component (A): | Melamine pyrophosphate^{*2} | 13 | 13 | 18 | 8 | 13 | 32 | 13 | 13 | 2 | 30 |
| Component (B): | Piperazine pyrophosphate^{*3} | 19 | 19 | 27 | 8 | 19 | | 19 | 19 | 5 | 50 |
| Component (C): | Phenol-based antioxidant(1)^{*4} | 0.1 | | 1.5 | 1 | | | | | | |
| Component (C): | Phenol-based antioxidant(2)^{*5} | | 0.1 | | | 4 | | | | | |
| | Phenol-based antioxidant(3)^{*6} | | | | | | | 0.1 | 7 | | |
| | Phenol-based antioxidant(4)^{*7} | | | | | | | | | 4 | |
| | Phenol-based antioxidant(5)^{*8} | | | | | | | | | | 0.2 |
| Component (D): | Phosphorous acid-based antioxidant(1)^{*9} | 0.1 | | 1.5 | | 4 | | 0.1 | | 4 | 0.2 |
| Component (D): | Phosphorous acid-based antioxidant(2)^{*10} | | 0.1 | | 0.5 | | | | 6 | | |
| Component (E): | Zinc oxide | 1.6 | 1.6 | 1.6 | 1.6 | 1.6 | 1.6 | 1.6 | 1.6 | 1.6 | 1.6 |
| Light stabilizer^{*11} | | 0.2 | 0.2 | 0.2 | 0.2 | 0.2 | 0.2 | 0.2 | 0.2 | 0.2 | 0.2 |
| Ultraviolet absorber^{*12} | | 0.1 | 0.1 | 0.1 | 0.1 | 0.1 | 0.1 | 0.1 | 0.1 | 0.1 | 0.1 |
| Calcium stearate | | 0.1 | 0.1 | 0.1 | 0.1 | 0.1 | 0.1 | 0.1 | 0.1 | 0.1 | 0.1 |
| Flammability Test (UL-94V) | | V-0 | V-0 | V-0 | V-0 | V-0 | V-2 | V-0 | V-0 | V-2 | V-0 |
| Color Difference (hr) | | 1728 | 1728 | 1968 | 1728 | 1968 | 528 | 672 | 1008 | 1008 | 864 |
| Glossiness (hr) | | 1584 | 1584 | 1728 | 1584 | 1344 | 336 | 528 | 864 | 864 | 672 |
| Crack (hr) | | 1344 | 1200 | 1584 | 1200 | 1200 | 144 | 336 | 672 | 528 | 528 |

| | | | | | | | | | | | |
|---|---|---|---|---|---|---|---|---|---|---|---|
| ^{*1}= Block polypropylene resin (MFI = 30 g/10 min) ^{*2}: Melamine pyrophosphate: molar ratio between pyrophosphoric acid and melamine is 1 : 2. ^{*3}: Piperazine pyrophosphate: molar ratio between pyrophosphoric acid and piperazine is 1 : 1. ^{*4}: AO-20 (available from ADEKA): 1,3,5-tris(3,5-di-tert-butyl-4-hydroxybenzyl)isocyanurate ^{*5}: AO-330 (available from ADEKA): 1,3,5-tris(3,5-di-tert-butyl-4-hydroxybenzyl)-2,4,6-trimethylbenzene ^{*6}: Less-hindered type: 1,1,3-tris(2-methyl-4-hydroxy-5-tert-butylphenyl)butane ^{*7}: Ester type: Tetrakis[methyl 3-(3,5-di-tert-butyl-4-hydroxyphenyl)propionate]methane ^{*8}: Semi-hindered ester type: 3,9-bis[1,1-dimethyl-2-1(3-tert-butyl-4-hydroxy-5-methylphenyl)propionyloxy)ethyl]2,4,8,10-tetraoxaspiro[5,5]undecane ^{*9}: Bis(2,6-di-tert-butyl-4-methylphenyl)pentaerythritol diphosphite ^{*10}: Tris(2,4-di-tert-butylphenyl)phosphite ^{*11}: 2,2,6,6-Tetramethyl-4-piperidylstearate ^{*12}: 2-Hydroxy-4-octoxy benzophenone | | | | | | | | | | | |

### Industrial Applicability

According to the present invention, a polyolefin-based resin composition with an excellent thermal resistance and an excellent flame retardancy can be provided.

## Claims

1. A flame-retardant polyolefin-based resin composition comprising a polyolefin-based resin and components (A), (B), and (C):
(A): one or more melamine salts selected from the group consisting of melamine orthophosphate, melamine pyrophosphate, and melamine polyphosphate,
(B): one or more piperazine salts selected from the group consisting of piperazine orthophosphate, piperazine pyrophosphate, and piperazine polyphosphate, and
(C): a compound represented by General Formula [1] and/or a compound represented by General Formula [2]: 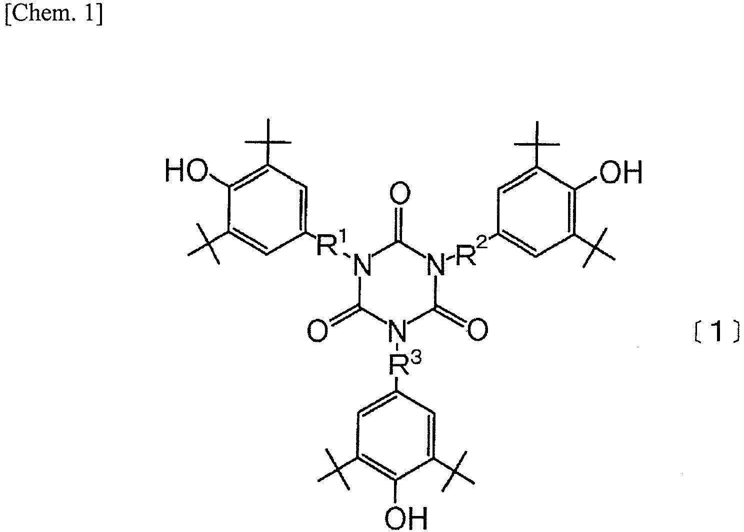 wherein R¹, R², and R³ are each independently a bivalent hydrocarbon group having 1 to 3 carbon atoms, and 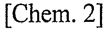 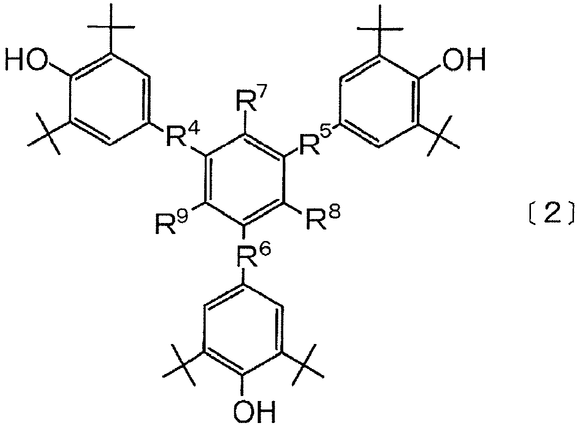
wherein R⁴, R⁵, and R⁶ are each independently a bivalent hydrocarbon group having 1 to 3 carbon atoms, and R⁷, R⁸, and R⁹ are each independently a hydrogen atom or a univalent hydrocarbon group having 1 to 4 carbon atoms; and
wherein the polyolefin-based resin is a polypropylene-based resin having a melt flow index (MFI) of from 3 to 60 g/10 min, and wherein the MFI is measured at 190°C and 10 kg in accordance with ASTM D 1238.

2. The flame-retardant polyolefin-based resin composition according to claim 1, further comprising one or both of a phosphorous acid-based antioxidant as component (D) and zinc oxide as component (E).

3. The flame-retardant polyolefin-based resin composition according to claim 1, wherein in the flame-retardant polyolefin-based resin composition,
the content of component (A) is 3 to 29% by mass,
the content of component (B) is 9 to 46% by mass, and
the content of component (C) is 0.01 to 5% by mass.

4. The flame-retardant polyolefin-based resin composition according to claim 2 or 3, wherein in the flame-retardant polyolefin-based resin composition,
the content of component (D) is 0.01 to 5% by mass, and
the content of component (E) is 0.01 to 10 parts by mass with respect to 100 parts by mass of the total of components (A) and (B).

5. A molded article obtained from the flame-retardant polyolefin-based resin composition according to any one of claims 1 to 4.

## Patentansprüche

1. Flammhemmende Harzzusammensetzung auf Polyolefinbasis, umfassend ein Harz auf Polyolefinbasis und die Komponenten (A), (B) und (C):
(A): ein oder mehrere Melaminsalze, ausgewählt aus der Gruppe, bestehend aus Melaminorthophosphat, Melaminpyrophosphat und Melaminpolyphosphat
(B): ein oder mehrere Piperazinsalze, ausgewählt aus der Gruppe, bestehend aus Piperazinorthophosphat, Piperazinpyrophosphat und Piperazinpolyphosphat, und
(C): eine Verbindung, dargestellt durch die allgemeine Formel [1] und / oder eine Verbindung, dargestellt durch die allgemeine Formel [2] : 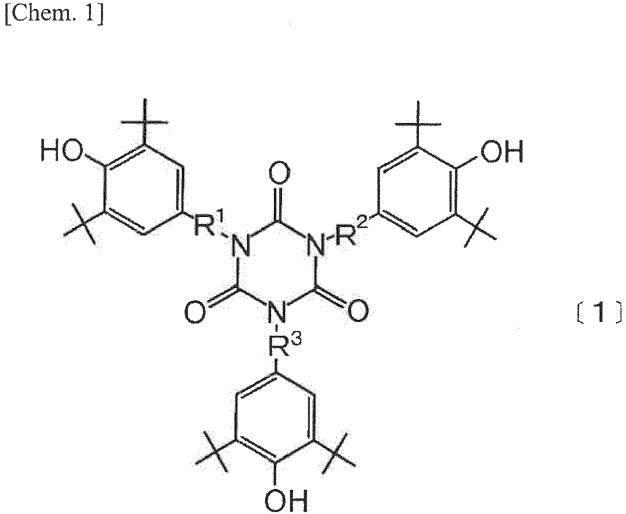 worin R¹, R² und R³ jeweils unabhängig voneinander eine zweiwertige Kohlenwasserstoffgruppe mit 1 bis 3 Kohlenstoffatomen sind und 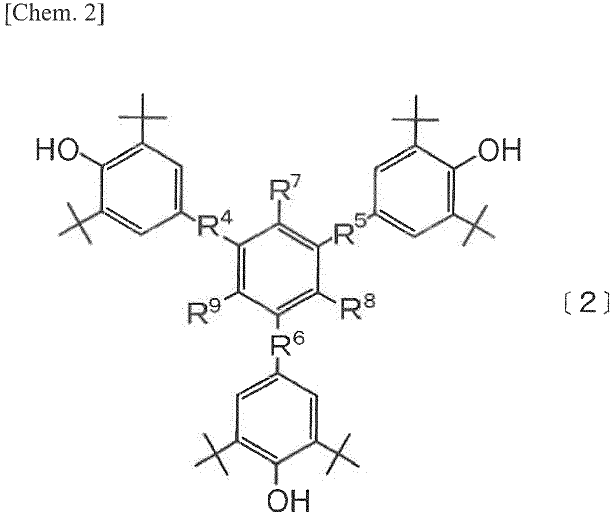
wobei R¹, R² und R³ jeweils unabhängig voneinander eine zweiwertige Kohlenwasserstoffgruppe mit 1 bis 3 Kohlenstoffatomen sind und R⁷, R⁸ und R⁹ jeweils unabhängig voneinander ein Wasserstoffatom oder eine einwertige Kohlenwasserstoffgruppe mit 1 bis 4 Kohlenstoffatomen sind; und
wobei das Harz auf Polyolefinbasis ein Harz auf Polypropylenbasis mit einem Schmelzfluß - Index (MFI) von 3 bis 60 g / 10 min ist, und wobei der MFI bei 190 °C und 10 kg in Übereinstimmung mit ASTM D 1238 gemessen wird.

2. Flammhemmende Harzzusammensetzung auf Polyolefinbasis nach Anspruch 1, weiterhin umfassend ein auf Phosphonsäure basierendes Antioxidans als Komponente (D) und/oder Zinkoxid als Komponente (E).

3. Flammhemmende Harzzusammensetzung auf Polyolefinbasis nach Anspruch 1, wobei in der flammhemmenden Harzzusammensetzung auf Polyolefinbasis,
der Gehalt an Komponente (A) 3 bis 29 Masse-% beträgt,
der Gehalt an Komponente (B) 9 bis 46 Massen-% beträgt, und
der Gehalt an Komponente (C) 0,01 bis 5 Masse% beträgt.

4. Flammhemmende Harzzusammensetzung auf Polyolefinbasis nach Anspruch 2 oder 3, wobei in der flammhemmenden Harzzusammensetzung auf Polyolefinbasis der Gehalt an Komponente (D) 0,01 bis 5 Massen-% beträgt und der Gehalt an Komponente (E) 0,01 bis 10 Massenteile in Bezug auf 100 Massenteile der Gesamtheit der Komponenten (A) und (B) beträgt.

5. Geformter Gegenstand erhalten aus der flammhemmenden Harzzusammensetzung auf Polyolefinbasis nach einem der Ansprüche 1 bis 4.

## Revendications

1. Composition ignifuge de résine à base de polyoléfine comprenant une résine à base de polyoléfine et de composants de (A), (B) et (C):
(A): un ou plusieurs sels de mélamine choisi dans le groupe constitué de la mélamine orthophosphate, de la pyrophosphate de mélamine et de la polyphosphate de mélamine,
(B): un ou plusieurs sels de pipérazine choisis dans le groupe constitué par l'orthophosphate de pipérazine, le pyrophosphate de pipérazine et le polyphosphate de pipérazine, et
(C): un composé représenté par la formule générale [1] et / ou un composé représenté par la formule générale [2]: 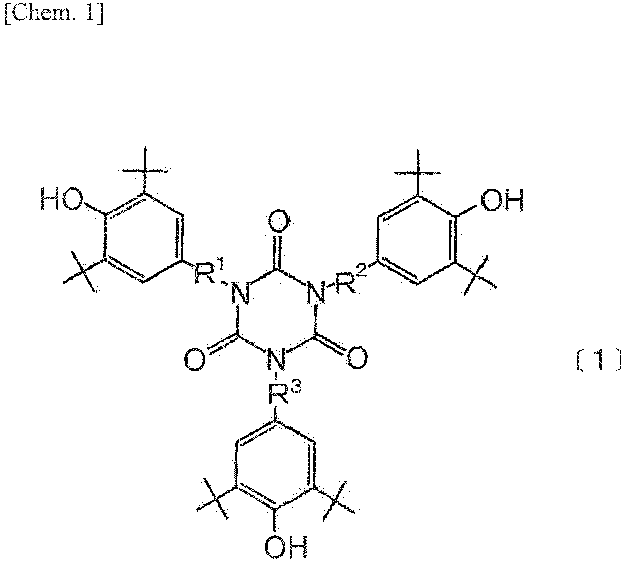 dans lequel R¹, R² et R³ sont chacun indépendamment un groupe hydrocarboné bivalent ayant 1 à 3 atomes de carbone, et 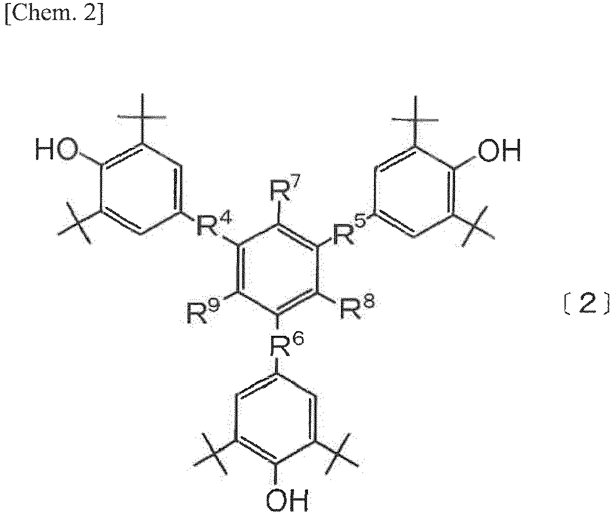
dans laquelle R¹, R² et R³ sont chacun indépendamment un groupe hydrocarboné bivalent ayant 1 à 3 atomes de carbone, et R¹, R² et R³ sont chacun indépendamment un atome d'hydrogène ou un groupe hydrocarboné univalent ayant 1 à 4 atomes de carbone les atomes; et
dans lequel la résine à base de polyoléfine est une résine à base de polypropylène ayant un indice de fluidité à chaud (MFI) de 3 à 60 g / 10 min, et dans lequel le MFI est mesuré à 190 ° C et 10 kg selon ASTM D 1238.

2. Composition ignifuge de résine à base de polyoléfine selon la revendication 1, comprenant en outre un ou les deux parmi un antioxydant à base d'acide phosphoreux comme composant (D) et de l'oxyde de zinc comme composant (E).

3. Composition ignifuge de résine à base de polyoléfine selon la revendication 1, dans laquelle dans la composition ignifuge de résine à base de polyoléfine,
la teneur en composant (A) est de 3 à 29% en masse,
la teneur en composant (B) est de 9 à 46% en masse, et
la teneur en composant (C) est de 0,01 à 5% en masse.

4. Composition ignifuge de résine à base de polyoléfine selon la revendication 2 ou 3, dans laquelle dans la composition ignifuge de résine à base de polyoléfine,
la teneur en composant (D) est de 0,01 à 5% en masse, et
la teneur en composant (E) est de 0,01 à 10 parties en masse par rapport à 100 parties en masse du total des composants (A) et (B).

5. Article moulé obtenu à partir de la composition ignifuge de résine à base de polyoléfine selon l'une quelconque des revendications 1 à 4.
